Europäisches Patentamt

European Patent Office

Office européen des brevets

(19)

(11) Publication number: **0 234 619**

A1

(12) # EUROPEAN PATENT APPLICATION

(21) Application number: **87200115.1**

(22) Date of filing: **23.01.87**

(51) Int. Cl.³: **C 25 B 13/04**

(30) Priority: **27.01.86 BE 2060912**

(43) Date of publication of application:
**02.09.87 Bulletin 87/36**

(84) Designated Contracting States:
**AT BE CH DE ES FR GB GR IT LI LU NL SE**

(71) Applicant: **"Studiecentrum voor Kernenergie", "S.C.K."**
**Seny Park Charles Lemairestraat 1**
**B-1160 Brussel(BE)**

(72) Inventor: **Vermeiren, Philippe**
**Zyp 27**
**B-1810 Wemmel(BE)**

(72) Inventor: **Adriansens, Walter Ludovicus Carolus**
**Boshoek 23**
**B-2400 Mol(BE)**

(72) Inventor: **Leysen, Roger Frans Rosa**
**Zwanenhof 14**
**B-2400 Mol(BE)**

(72) Inventor: **Spaepen, Gustaaf Jozef Frans**
**Molsebaan 75**
**B-2480 Dessel(BE)**

(74) Representative: **Debrabandere, René et al,**
**c/o Bureau De Rycker Charlottalei 48**
**B-2018 Antwerpen(BE)**

(54) Method for preparing a diaphragm and diaphragm prepared according to this method.

(57) A dry mixture is made of a non-modified fluorinated polymer, particularly a deformable, web-forming polytetrafluoroethylene, in powder and/or fibre form, an inorganic hydrophilic material as a powder and a porous hydrophilic material or a pore forming agent. The mixture is pressed into a cake. The cake is subjected to rolling steps. Between rolling steps the cake is turned over an angle.

EP 0 234 619 A1

- 1 -

"Method for preparing a diaphragm and
diaphragm prepared according to this method".

The invention relates to a method for preparing
a diaphragm, according to which at least a non-modified
fluorinated polymer in powder and/or fibre form and an
inorganic hydrophilic material  as a powder are dry mixed
and the mixture is subjected to rolling steps,whereby the
mixture is turned over an angle between the rolling steps.

Such a method is known from FR-A-2.421.190.
According to this method, a powderlike polymer-binder is
dry mixed together with a pore forming agent as a powder
and eventually with components such as titanium-dioxyde
or bariumsulphate. A liquid lubricant is however added
to this mixture to make a workable paste. Afterwards, the
wet paste is rolled in such a way that it is turned over
90° between each rolling step and then it is sintered.
Finally the pore forming substance is removed.

The addition of a lubricant complicates the method.
A sintering is necessary.

Other methods for preparing a diaphragm are
known but these methods are not of the kind concerned and/or
comprise the use of surfactants or liquid lubricants.

According to the method disclosed in
DD-B-2005 31/2 polytetrafluoroethylene is used that has
been modified using a plasmochemical or tribochemical route
in order to make it hydrophilic. Without this modification of the PTFE the wettability of the diaphragm would be insufficient, unless great amounts of expensive surfactants were incorporated inside the diaphragm.

Moreover, according to the method in DD-B-2005 31/2, in most of the cases, beside the binding agent, the hydrophilic component and the pore forming agent,a certain amount of surfactants is mixed so that a pulpy mass is obtained that is pressed after drying. Instead of being pressed, the mixture can be rolled or sintered. In the case where the mixing of the powders is a completely dry method, which means without the addition of any surfac⁻ ⁻cs, there are only two components that are mixed, one of them being a modified polytetrafluoroethylene .

In DD-B-2005 31/2, the use of a hydrophilic material is not recommended because of the expectation that this would reduce the mechanical stability of the diaphragm. The necessity of using a modified polymer binder complicates this procedure.

US-A-4 294 899 describes a wet method wherein selected lubricants are used.

In the method according to EP-A-0 096 991 no rolling step is performed.

The purpose of the present invention is to prepare a diaphragm for several applications, in particular for the chlor-alkali electrolysis, having good mechanical, physical and electrochemical properties, without the necessity for modification of the polymer binder or the use of surfactants or liquid lubricants.

For this purpose the dry mixture is dry-pressed into a cake and the dry cake is subjected to the rolling steps.

Surprisingly the addition of a lubricant can be omitted. Said lubricant can hinder the binding of the fluorinated polymer probably by forming a film around the particles. The lubricant holds the particles temporarily together to permit rolling but the binding itself has to be obtained by sintering. With the method according to the invention a diaphragm with sufficient strength can in many cases be obtained without sintering treatment.

The fact that the foil is turned between succeeding rolling steps is known from EP-A-43.632. In this case however the purpose is to produce a layer of an electrode staring with a polymer binder and carbon or a metal as an electrically conducting powder.

In a particular embodiment of the invention, a deformable,web-forming fluorinated polymer is used.

Usefully a polytetrafluoroethylene having a content of at the most 5 wt % of amorphous polymer is used.

When a more pronounced porosity is wanted,e.g. for chlor-alkali electrolysis,a porous hydrophylic materiel or a pore forming agent is mixed with the fluorinated polymer and the hydrophilic material. When a pore forming agent is used, said pore forming agent is removed after the rolling steps.

In another particular form of embodiment of the invention, a porous or pore forming agent is dry mixed with the fluorinated polymer and the hydrophilic material.

Preferably, the turning between the rolling steps is over about 90°.

Suitable fluorinated polymers are polytetrafluoroethylene (Teflon[R]), and a copolymer of ethylene and chlorotrifluoroethylene (Halar[R]).Mixtures of both polymers can also be used.

In a preferably applied form of embodiment of the invention the rolled foil is subjected to a sintering treatment.

The sintering treatment may improve the mechanical strength of the diaphragm.

The inorganic hydrophilic material must be resistant under the operating conditions of the diaphragm.

In the case the diaphragm is used in a chlor-alkali cell, the inorganic hydrophilic material can be $ZrO_2$, $ZrO(OH)_2 \cdot nH_2O$, $BaSO_4$ or $TiO_2$.

Especially with one of these hydrophilic components, a diaphragm with excellent electrochemical and mechanical properties is obtained.

The use of $ZrO(OH)_2$ as hydrophilic material in a diaphragm is known as such from DE-A-3.147.106. According to the method disclosed in this publication, asbestos fibres or a mixture of asbestos and polytetrafluoroethylene fibres are impregnated with a solution of this product, whereafter this product is transformed into $ZrO_2$ by pyrolysis. The method is a completely wet one. Whenever a polymer such as polytetrafluoroethylene is considered, fibres instead of a powder are used.

The use of $BaSO_4$ and $TiO_2$ as the hydrophilic material in a diaphragm is known as such from FR-A-2.421.190, which is already mentioned, but in the method according to said publication a liquid lubricant is added.

The use of $ZrO_2$ is known from the above mentioned DD-B-2005 31/2 which concerns however a method which is not according to the invention.

In an efficient form of embodiment of the method according to the invention, between 5 wt% and 85 wt % of hydrophilic material, calculated relative to the mixture, is used.

In another interesting form of embodiment of the method according to the invention a mixture of a powder and polymer fibres is used as fluorinated polymer.

In an advantageous form of embodiment of the method according to the invention between 5 wt % and 75 wt %, calculated relative to the amount of mixture, of fluorinated polymer is used.

The invention also concerns a diaphragm prepared according to one of the preceeding procedures.

Other particularities and advantages of the invention will be clarified by the following description of a method to prepare a diaphragm and of a diaphragm prepared according to this method, according to the invention. This description is only given as an example and does not limit the invention.

Between 5 and 75 wt % of a fluorinated deformable web-forming polymer, comprising a powder with a particle size inferior to 1000 $\mu$m or such powder and fibres, is dry mixed with 5 to 85 wt % of hydrophilic material in the form of a powder with a particle size inferior to 500 $\mu$m and preferably inferior to 100 $\mu$m and, for the remainder, a porous or pore forming agent with a particle size inferior to 500 $\mu$m and preferably to 100 $\mu$m. The amounts are calculated relative to the total mixture. The porous agent is hydrophilic and porous in itself and remains in the diaphragm. The pore forming agent creates porosity by leaching out.

As deformable fluorinated polymer can be chosen : polytetrafluoroethylene (Teflon[R]), a copolymer of ethylene and chlorotrifluoroethylene (Halar[R]) or a mixture of both polymers.

As deformable web-forming polymer is particularly suited polytetrafluoroethylene having a content of amorphous polymer of at the most 5 wt %.

As hydrophilic material $ZrO(OH)_2 \cdot nH_2O$, $ZrO_2$, $BaSO_4$ or $TiO_2$ can be used.

As a pore forming agent, as it is known, one can use components such as $CaCO_3$ that are soluble in an acid solution e.g. HCl, products which are soluble in water, like NaCl and $Al_2(SO_4)_3$ or in general products which can be removed by any means.

The dry mixture of the three powders is first pressed using a pressure less than 500 $kg/cm^2$ and as an example 20 $kg/cm^2$, to form a cake in the form of a square. This cake is rolled until a final thickness of 2000 $\mu$m and preferably of 750 $\mu$m by a sequence of rolling steps. Between two steps the cake is turned over about 90° and the distance between the rolls is reduced by maximum 500 $\mu$m. During the rolling the rolls have a rotation speed at the surface of a few cm/s e.g. 5.6 cm/s.

Several cakes, whether they have been rolled or not, can be laid upon each other and rolled together in order to form one diaphragm. In some cases these cakes are identical but in other cases they are entirely different according to thickness, composition or particle size.

The foil which is obtained after rolling is then sintered up to a temperature between 250°C and 400°C. Good results can also be obtained without any sintering treatment of the diaphragm. In general however, the mechanical strength of the diaphragms is improved when a sintering treatment is applied.

When a pore forming agent has been used said agent is being removed. If this agent is $CaCO_3$, it is leached out in an acid solution. If NaCl or $Al_2(SO_4)_3$ has been used as a pore forming agent, it is leached out with water.

In this way a diaphragm is obtained with a porosity ranging between 10 and 75 %.

Such a diaphragm shows excellent properties with respect to the chlor-alkali electrolysis :

- The resistance at 80°C in 3 N NaOH is lower than $2 \Omega cm^2$.

- A chlor-alkali electrolysis cell producing a 3 N caustic soda and using a diaphragm as described above shows an excellent current efficiency.

- At a current density of 250 $mA.cm^{-2}$, the permeability through such a diaphragm ranges between about 0.5 x $10^{-9}$ and 5 x $10^{-9} m^3.N^{-1}.s^{-1}$, depending on the preparation and the composition.

The diaphragm can also be used for other electrolytic cells e.g. for water electrolysis.

Diaphragms, produced as described above, can be put together in such a way that they form a bag or any other embodiment according to the needs of the cells wherein they are used. For this purpose such diaphragms are attached to each other by pressing, welding , clamping, stapling or sewing or by any suitable other means.

The invention will now be further illustrated by means of the following examples :

Example 1

For the preparation of a diaphragm the three following powders are dry mixed : 21 wt % of polytetrafluoroethylene (PTFE) with a particle size inferior to 1000 $\mu$m, 46 wt % of $ZrO_2$ with a particle size inferior to 100 $\mu$m, 33 wt % of $CaCO_3$ as a pore forming agent with a particle size inferior to 100 $\mu$m.

The dry mixture is first pressed under a pressure of about 20 $kg/cm^2$ to form a cake in the form of a square, with a thickness of 4 mm. The cake is rolled between rolls until a final thickness of 750 $\mu$m by a sequence of rolling steps. Between the steps the cake is turned over about 90° and the aperture between the rolls is decreased by 100 $\mu$m.

The foil obtained after rolling is sintered up to 350° C and kept at this temperature during four hours.

At last the pore forming agent is leached out in a boiling 6 N HCl solution.

Example 2

A diaphragm in accordance with the present invention is made with the following ingredients and in the manner described hereafter :

| | |
|---|---|
| $BaSO_4$ (Merck) | : 40 g |
| $CaCO_3$ (J.T. Baker) | : 55 g |
| PTFE , 636 N (Du Pont de Nemours) | : 25 g |

This dry mixture is dry-pressed at a pressure of 20 kg/cm$^2$ in order to form a cake.

The cake is rolled between two sheets and between two succeeding steps it is turned over 90°. The distance between the rolls is reduced by 200 $\mu$m until the foil reaches a thickness of 1500 $\mu$m. Afterwards the aperture is reduced by 100 $\mu$m between two succeeding steps until a thickness of 800 $\mu$m is obtained. Then the diaphragm is sintered in an oven up to 350°C during 4 hours under an air atmosphere. At last the $CaCO_3$ is leached out by boiling in 6 N HCl during 4 hours.

In a chlor-alkali electrolysis experiment, during one month a current efficiency between 98 and 100 % was reached with a production of 2.5 N NaOH. The current efficiency is being defined as the ratio of the measured and theoretically produced OH$^-$-ions.

The current density was 200 $mA.cm^{-2}$ and the working temperature was about 55°C. The diaphragm had an average permeability of about $1.5 \times 10^{-9}m^3.N^{-1}.s^{-1}$.

Example 3

A diaphragm in accordance with the present invention is made with the following ingredients and in the manner described hereafter :

| | |
|---|---|
| $ZrO_2$ , E30 (Magnesium Elektron) | : 40 g |
| NaCl, Microzo (KNZ) | : 55 g |
| PTFE, 636 N (Du Pont de Nemours) | : 25 g |

With this dry mixture, 5 cakes are dry-pressed separately at a pressure of 20 $kg/cm^2$.

The five cakes are rolled separately until each of them reaches a thickness of 1600 $\mu$m, the rotation speed of the rolls being about 5 cm/s ; between two steps each cake is turned over about 90° and the distance between the rolls is reduced by 300 $\mu$m.

After reduction of the thickness of each cake to 1600 $\mu$m, the five cakes are laid upon each other and rolled together in order to form one diaphragm with a thickness of 800 $\mu$m and a surface area of 0.48 $m^2$.

The diaphragm is sintered up to 350°C during 4 hours and the NaCl is leached out in boiling $H_2O$ during 4 hours.

A test sample of such a diaphragm has a porosity of 60 %. The resistance of said sample at 80°C in 3 N NaOH equals 1.43 $\Omega.cm^2$. Using 305 g/l NaCl at 55°C and 200 $mA.cm^{-2}$, the diaphragm has a permeability of $5.10^{-9}m^3.N^{-1}.s^{-1}$. A 1.5 N NaOH solution was produced with a current efficiency of about 85 %.

Example 4

A diaphragm in accordance with the present invention is made with the following ingredients and in the manner described hereafter :

| | |
|---|---|
| ZrO$_2$, E30 (Magnesium Elektron) | : 30 g |
| CaCO$_3$ (J.T. Baker) | : 65 g |
| PTFE, 636 N (Du Pont de Nemours) | : 25 g |

With this dry mixture, 6 cakes are pressed separately at a pressure of 20 kg/cm$^2$. Then , the 6 cakes are rolled separately until each of the 6 cakes reaches a thickness of 1300 $\mu$m. At that time the 6 cakes are laid upon each other and they are rolled together until the foil reaches a surface of 0.48 m x 0.48 m. Between two rolling steps the foil is turned over 90°. Afterwards, the foil is turned over 180° between the succeeding rolling steps until the diaphragm has a thickness of about 800 $\mu$m. At that time the diaphragm has the dimensions of 1.27 m x 0.5 m.

The diaphragm is heated at 350°C and the pore filler is leached out as discussed in example 1.

A test sample of this diaphragm has a porosity of 55 %, and the ohmic drop of said sample at 80°C in 3 N NaOH equals 1.6 $\Omega$.cm$^2$.

After 1100 hours of operation in a chlor-alkali electrolysis cell, a 3 N NaOH solution was produced with a current efficiency of 86 %. At this time the cell was operating at 80°C and a current density of 200 mA.cm$^{-2}$, the cell voltage had a value of 3.36 V and the diaphragm had a permeability of 0.7 x 10$^{-9}$ m$^3$.N$^{-1}$.s$^{-1}$.

- 11 -

CLAIMS

1. Method for preparing a diaphragm, according to which at least a non-modified fluorinated polymer in powder and/or fibre form and an inorganic hydrophilic material as a powder are dry mixed and the mixture is subjected to rolling steps,whereby the mixture is turned over an angle between rolling steps, characterized in that this dry mixture is pressed into a cake and the dry cake is subjected to the rolling steps.

2. Method according to claim 1, characterized in that a deformable, web-forming fluorinated polymer is used.

3. Method according to claim 2, characterized in that as fluorinated polymer polytetrafluoroethylene having a content of at the most 5 wt % of amorphous polymer is used.

4. Method according to either one of claims 1 to 3,characterized in that a porous hydrophilic material or a pore forming agent is dry mixed with the fluorinated polymer and the hydrophilic material.

5. Method according to claim 4,characterized in that $CaCO_3$, $NaCl$ or $Al_2(SO_4)_3$ is used as pore forming agent.

6. Method according to claim 5,characterized in that $CaCO_3$ is used as a pore forming agent and that this substance is leached out in an acid solution.

7. Method according to either one of claims 1 to 6,characterized in that the turning between the rolling steps is over about 90°.

8. Method according to either one of claims 1 to 7,characterized in that the rolled foil is subjected to a sintering treatment.

9. Method according to claim 8, characterized in that the temperature of the sintering treatment ranges between 250°C and 400°C.

10. Method according to either one of claims 1 to 9, characterized in that as inorganic hydrophilic material $ZrO_2$, $ZrO(OH)_2.nH_2O$, $BaSO_4$ or $TiO_2$ is used.

11. Method according to either one of claims 1 to 10, characterized in that, between 5 wt % and 85 wt % (calculated relative to the mixture) of hydrophilic material is used.

12. Method according to either one of claims 1 to 11, characterized in that a mixture of a powder and polymer fibres is used as fluorinated polymer.

13. Method according to either one of claims 1 to 12, characterized in that between 5 wt % and 75 wt %, (calculated relative the mixture), of fluorinated polymer is used.

14. Method according to one of the claims 1 to 13, characterized in that several mixtures are pressed into a cake and several cakes are directly or after being rolled to a foil, rolled upon each other.

15. Method according to one of the claims 1 to 14, characterized in that two or more cakes rolled into a foil are attached together by pressing, clamping, welding, sewing or stapling.

16. Diaphragm prepared according to the process according to either one of claims 1 to 15.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | FR-A-2 378 106 (STUDIECENTRUM VOOR KERNENERGIE)<br><br>* Page 12, lines 6-19; claims 1-3 *<br><br>--- | 1,2,4, 7,11, 13 | C 25 B 13/04 |
| Y,D | US-A-4 294 899 (WITHERSPOON)<br><br>* Example 1 *<br><br>--- | 1,2,4, 7,11, 13 | |
| A,D | EP-A-0 096 991 (IMPERIAL CHEMICAL INDUSTRIES)<br>* Page 8, lines 15-27; page 9, lines 1-6; page 10, lines 17-39 *<br><br>--- | 1,10, 14,15 | |
| A | US-A-4 292 146 (CHANG et al.)<br><br>* Column 9, line 9 - column 10, line 63 *<br><br>--- | 1-11, 15,16 | TECHNICAL FIELDS SEARCHED (Int. Cl.4)<br><br>C 25 B<br>H 01 M |
| A,D | FR-A-2 421 190 (HOOKER CHEMICALS & PLASTICS CORP.)<br><br>* Page 9, lines 10-12,19-37; example 1; claims 1-3,12-16 *<br><br>----- | 1,2,4-10,13-16 | |

The present search report has been drawn up for all claims

| Place of search | Date of completion of the search | Examiner |
|---|---|---|
| THE HAGUE | 07-05-1987 | COOK S.D. |